# EUROPÄISCHE PATENTSCHRIFT

(11) **EP 3 329 269 B1**
(45) Veröffentlichungstag und Bekanntmachung des Hinweises auf die Patenterteilung: **11.09.2019**
(21) Anmeldenummer: 16757547.1
(22) Anmeldetag: 13.07.2016
(51) Int. Cl.: G01N 27/87, G01N 27/90

(54) **SONDENEINRICHTUNG, ROTIERKOPF UND PRÜFGERÄT**
SENSOR ARRANGEMENT FOR ROTATING HEAD AND INSPECTION DEVICE
AGENCEMENT DE CAPTEURS POUR TETE ROTATIVE ET APPAREIL DE CONTROLE

(30) Priorität: 28.07.2015 DE 102015214232
(43) Veröffentlichungstag der Anmeldung: 06.06.2018
(73) Patentinhaber: Prüftechnik Dieter Busch GmbH, 85737 Ismaning (DE)
(72) Erfinder: PETERS, Jürgen, 85566 Pliening (DE)
(86) Internationale Anmeldenummer: PCT/DE2016/100312
(87) Internationale Veröffentlichungsnummer: WO 2017/016540

(56) Entgegenhaltungen:
- DE-A1- 3 739 190
- DE-A1- 4 324 332
- DE-A1-102012 108 241
- US-A- 3 612 987
- US-A1- 2011 025 316

## Beschreibung

Die vorliegende Erfindung betrifft eine Sondeneinrichtung, die wenigstens einen um eine Drehachse drehbar gelagerten Trägerarm, wenigstens eine mit dem Trägerarm verbundene Sonde sowie wenigstens eine Kabelführung zum Führen eines Sondenkabels umfasst. Ferner betrifft die Erfindung einen Rotierkopf mit wenigstens einer derartigen Sondeneinrichtung und wenigstens einem in der Kabelführung geführten Sondenkabel sowie ein Prüfgerät mit wenigstens einer derartigen Sondeneinrichtung oder mit wenigstens einem derartigen Rotierkopf.

Insbesondere für die Untersuchung von Halbzeugen auf Fehler wie Risse und Lunker mittels Wirbelstrom- oder Streufluss-Verfahren kommen Prüfgeräte zum Einsatz, die als Rotiersysteme ausgebildet sind. Bei derartigen Rotiersystemen sind Sondeneinrichtungen an drehbaren Rotierköpfen des Prüfgeräts angeordnet. Indem der Rotierkopf mitsamt den daran angeordneten Sondeneinrichtungen gedreht wird während ein länglicher Prüfling durch eine mittige Durchlassöffnung durch den Rotierkopf hindurch geschoben wird, bewegen sich die Sondeneinrichtungen relativ zum Prüfling auf einer schraubenförmigen Bahn. Um Magnetfeldänderungen infolge von Fehlerstellen des Prüflings erfassen zu können, müssen sich für das Wirbelstrom-Verfahren vorgesehene Sonden der Sondeneinrichtungen in einem vorgegebenen Abstand bzw. möglichst nahe an der Oberfläche des Prüflings befinden. Beim Streufluss-Verfahren hingegen stehen die Sonden in Kontakt mit dem Prüfling und schleifen auf dessen Oberfläche.

Aus der DE 10 2012 108 241 A1 ist eine Sondeneinrichtung bzw. ein Sondenträger für ein als Rotiersystem ausgebildetes Prüfgerät zur zerstörungsfreien Prüfung eines langgestreckten Prüflings mittels Streufluss oder Wirbelströmen bekannt. Der Sondenträger ist modular und steckbar ausgeführt, so dass die Anpassung des Prüfgeräts an einen veränderten Prüflingsdurchmesser schnell erfolgen kann.

Andere bekannte Sondeneinrichtungen weisen einen um einen Drehpunkt frei beweglich gelagerten Trägerarm auf. An einem Ende des nach Art eines zweiseitigen Hebels gelagerten Trägerarms ist die Sonde angeordnet und am diesem Ende entgegengesetzten Ende des Trägerarms ist ein Gegengewicht vorgesehen. Sofern sich ein Prüfling beispielsweise unregelmäßig durch die Durchlassöffnung des Rotierkopfes bewegt, können die Sonden infolge der drehbaren Lagerung des sie tragenden Trägerarms entsprechend ausweichen. Mittels des Gegengewichtes sowie einer am Trägerarm angreifenden Feder lässt sich eine Position der Sonde in einem vorgegebenen Abstand von der Oberfläche des Prüflings sowie gegebenenfalls eine Anpresskraft der Sonde auf den Prüfling bei einer vorgegebenen Drehzahl des Rotierkopfes und einem vorgegebenen Durchmesser des Prüflings einstellen.

Damit bei großen Prüflingen und entsprechenden Drehzahlen des Rotierkopfes die Sonden nicht von der Oberfläche des Prüflings abheben, wodurch der Prüfungsvorgang beim Streufluss-Verfahren unterbrochen wird, ist man in der Praxis dazu geneigt, die Federkraft und damit die Anpresskraft der Sonde auf den Prüfling übermäßig hoch auszubilden oder die Drehzahl des Rotierkopfes zu verringern. Eine große Anpresskraft führt jedoch zu einer verstärkten Abnutzung der auf der Prüflingsoberfläche schleifenden Sonden, während eine Verringerung der Drehzahl des Rotierkopfes zu einem verringerten Durchsatz des Prüflings führt. Auch die korrekte Einstellung des Abstandes der Sonden von der Oberfläche des Prüflings im Wirbelstrom-Verfahren gestaltet sich gemeinhin aufgrund der Einflüsse von Drehzahl und Prüflingsdurchmesser in der Praxis als schwierig. Einen weiteren Einfluss üben ferner Sondenkabel aus, die als Kabelbögen oder Schlaufen von einem Anschluss oder Einlass am Rotierkopf zur Sondeneinrichtung und in einer Kabelführung derselben über einen Trägerarm der Sondeneinrichtung geführt zur Sonde verlaufen, um die Beweglichkeit des Trägerarms zu gewährleisten. Diese Kabelbögen erfahren bei Drehen des Rotierkopfes eine Zentrifugalkraft und üben dadurch ein Drehmoment auf den Trägerarm aus, wodurch sie die Anpresskraft bzw. die Position der Sonden in Bezug auf den Prüfling beeinflussen.

Es ist daher die Aufgabe der vorliegenden Erfindung, eine Sondeneinrichtung, einen Rotierkopf und ein Prüfgerät zu schaffen, welche die Einstellung von Sonden bezüglich eines Prüflings vereinfachen.

Diese Aufgabe wird durch die Sondeneinrichtung mit den Merkmalen des Anspruchs 1, durch den Rotierkopf mit den Merkmalen des Anspruchs 4 und durch das Prüfgerät mit den Merkmalen des Anspruchs 5 gelöst.

Erfindungsgemäß wird eine Sondeneinrichtung vorgeschlagen, bei der die Kabelführung einen entlang des Trägerarms von der Sonde zur Drehachse verlaufenden ersten Endabschnitt und einen im Wesentlichen von der Drehachse ausgehenden zweiten Endabschnitt aufweist. Mit anderen Worten liegen sowohl der erste Endabschnitt als auch der zweite Endabschnitt im Wesentlichen mit einem ihrer Enden an der Drehachse an bzw. eines ihrer jeweiligen Enden ist im Wesentlichen an der Drehachse positioniert bzw. eines ihrer jeweiligen Enden befindet sich auf der Höhe der Drehachse. Sowohl der erste Endabschnitt als auch der zweite Endabschnitt schließen damit mit der Drehachse einen Winkel ein. Hierdurch wird bewirkt, dass ein Sondenkabel auf der Höhe der Drehachse des Trägerarms der Sondeneinrichtung bzw. deren Sonde zugeführt oder von dieser abgeführt wird. Infolgedessen kann das Sondenkabel keinerlei Drehmoment auf den Trägerarm bewirken, wenn sowohl die Sondeneinrichtung als auch das Sondenkabel als Teil eines Rotierkopfes eines Rotiersystems gedreht werden und eine Zentrifugalkraft erfahren. Somit kann das Sondenkabel auch keinerlei Einfluss auf die Einstellung der Position der Sonde oder deren Anpresskraft auf die Oberfläche von Prüflingen ausüben. Die Einstellung der Sonde bezüglich des Prüflings wird dadurch nicht nur erheblich vereinfacht, es ergibt sich darüber hinaus eine Mehrzahl weiterer Vorteile. So kann ein Abheben der Sonde von der Oberfläche des Prüflings wirksamer vermieden werden, wobei auch der Verschleiß der Sonde aufgrund einer optimaler eingestellten Anpresskraft verringert werden kann. Hierdurch verlängern sich Wartungsintervalle für die Sondeneinrichtung. Sofern die Sondeneinrichtung über Gegengewichte zur Einstellung der Position der Sonde oder deren Anpresskraft verfügt, entfallen Nacharbeiten an diesen Gegengewichten. Benötigte Drehzahlen des Rotierkopfes können immer erreicht werden und ermöglichen somit eine maximale Produktivität. Bei Kollision mit Prüflingen ist die Beanspruchung von Sondenschuhen infolge eines leichteren Ausweichens auch bei berührungslosen Rotiersystemen verringert.

Ganz allgemein kann der Trägerarm eine Längsachse aufweisen, wobei die Längsachse und die Drehachse zueinander windschief ausgebildet sein können. Der Trägerarm bzw. dessen Längsachse kann die Drehachse aber auch schneiden. Ferner kann die Sondeneinrichtung mehr als einen drehbar gelagerten Trägerarm aufweisen. So kann die Sonde an den Enden zweier oder mehrerer zueinander parallel angeordneter Trägerarme befestigt sein, die beide um dieselbe Drehachse drehbar gelagert sind. Zudem kann zur Einstellung der Anpresskraft oder Position der Sonde wenigstens ein Gegengewicht am Trägerarm angeordnet sein, dessen Lage vorteilhafterweise entlang des Trägerarmes verstellbar ist.

Es sind Ausführungsformen der Sondeneinrichtung möglich, bei denen der erste Endabschnitt und der zweite Endabschnitt direkt miteinander verbunden sind. In diesen Fällen gehen die beiden Endabschnitte im Wesentlichen am Drehpunkt des Trägerarms ineinander über. Bei anderen Ausführungsformen der Sondeneinrichtung verbindet ein entlang der Drehachse verlaufender Kabelführungsabschnitt den ersten Endabschnitt und den zweiten Endabschnitt miteinander. Beispielsweise kann der erste Endabschnitt von der Sonde zur Drehachse oder zum Drehpunkt des Trägerarms führen, wo er in den zur Drehachse parallelen Kabelführungsabschnitt mündet, welcher wiederum entlang der Drehachse vom Drehpunkt des Trägerarms wegführt und von diesem entfernt in den zweiten Endabschnitt mündet.

Bei der erfindungsgemäßen Sondeneinrichtung kann der Trägerarm nach Art eines einseitigen oder eines zweiseitigen Hebels gelagert sein. In beiden Fällen kann die Sonde an einem Ende oder Endabschnitt des Trägerarms mit diesem verbunden sein. Ist der Trägerarm nach Art eines zweiseitigen Hebels gelagert, so ist vorzugsweise außer der Sonde wenigstens ein Gegengewicht am Trägerarm befestigt, wobei sich Sonde und Gegengewicht bezüglich der Drehachse des Trägerarmes auf entgegengesetzten Seiten, und zwar bevorzugt an entgegengesetzten Enden oder Endabschnitten des Trägerarms befinden.

Vorteilhaft weist ein erfindungsgemäßer Rotierkopf wenigstens eine Feder auf, die mit einem Ende am Trägerarm der Sondeneinrichtung angreift. Durch geeignete Auswahl des Angriffspunktes der Feder am Trägerarm sowie deren Federkonstante kann zur Einstellung der Position der Sonde relativ zum Prüfling bzw. der Anpresskraft der Sonde an den Prüfling beigetragen werden.

Ein erfindungsgemäßes Prüfgerät weist bevorzugt wenigstens ein Paar an Sondeneinrichtungen auf, deren Sonden einander zugewandt angeordnet sind. Wird ein Prüfling zwischen den Sonden angeordnet oder hindurchgeschoben, so können die Sonden simultan zwei einander entgegengesetzte Seiten des Prüflings überprüfen.

Die Erfindung wird nachfolgend anhand von Zeichnungen näher erläutert. Es zeigen:
- Figur 1: einen Rotierkopf gemäß dem Stand der Technik mit zwei Sondeneinrichtungen;
- Figur 2: eine Sondeneinrichung gemäß dem Stand der Technik;
- Figur 3: eine Detailansicht eines erfindungsgemäßen Rotierkopfes;
- Figur 4: eine erfindungsgemäße Sondeneinrichtung.

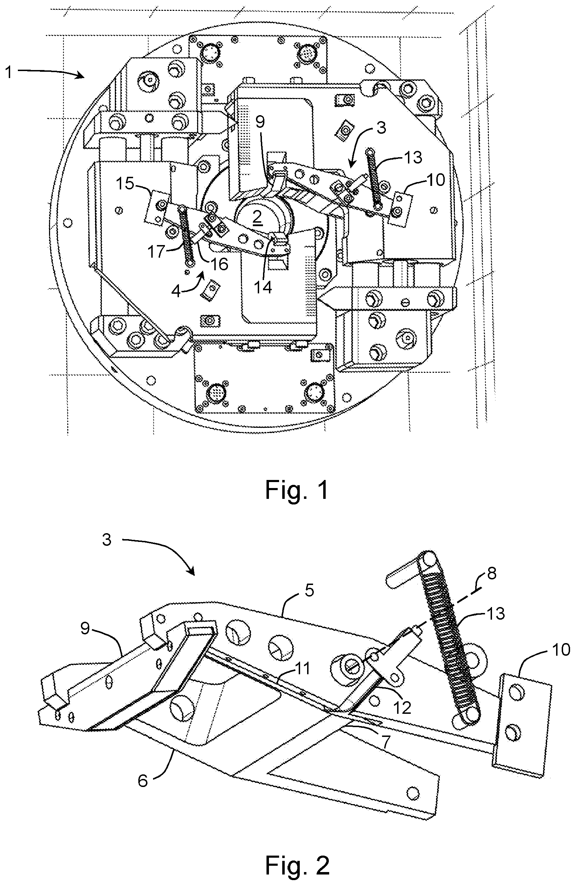

In der Figur 1 ist ein bekannter kreisförmiger Rotierkopf 1 eines als Rotiersystem ausgebildeten Prüfgerätes dargestellt. Der Rotierkopf 1 weist ein zentrales Durchgangsloch 2 und zwei im Wesentlichen identisch ausgebildete Sondeneinrichtungen 3 und 4 auf.

Die Sondeneinrichtung 3 ist in der Figur 2 vergrößert zu sehen. Sie umfasst zwei längliche Trägerarme 5 und 6, die parallel zueinander angeordnet und mittels eines im Wesentlichen mittig angeordneten Mittelsteges 7 miteinander verbunden sind. Auf der Höhe des Mittelsteges 7 sind die Trägerarme 5 und 6 nach Art eines zweiseitigen Hebels um eine in der Figur 2 gestrichelt eingezeichnete Drehachse 8 drehbar gelagert. Von den dem Durchgangsloch 2 zugewandten Enden der Trägerarme 5 und 6 wird eine sich zwischen den Trägerarmen 5 und 6 erstreckende Sonde 9 gehalten, während an dem dem Durchgangsloch 2 abgewandten Ende des Trägerarmes 5 ein Gegengewicht 10 angeordnet ist. Ferner weist die Sondeneinrichtung 2 eine Kabelführung mit einem von der Sonde 9 ausgehenden und entlang des Trägerarms 5 verlaufenden ersten Endabschnitt 11 und einem sich an den ersten Endabschnitt 11 anschließenden zweiten Endabschnitt 12 auf, wobei der zweite Endabschnitt 12 die Drehachse 8 weder schneidet noch von ihr ausgeht. Die Kabelführung ist zur Aufnahme eines in den Figuren aus Gründen der Übersichtlichkeit nicht dargestellten Sondenkabels vorgesehen. Schließlich greift eine Spiralfeder 13 an einer Stelle zwischen dem Mittelsteg 7 und dem Gegengewicht 10 an dem Trägerarm 5, mithin an einem von der Sonde 9 abgewandten Endabschnitt des Trägerarms 5 an.

Die Sondeneinrichtung 4 entspricht in ihrem Aufbau im Wesentlichen der Sondeneinrichtung 3. Insbesondere weist auch die Sondeneinrichtung 4 eine Sonde 14 auf, die an Endabschnitten ihrer Trägerarme befestigt ist. An einem der Sonde 14 entgegengesetzten Ende eines Trägerarmes der Sondeneinrichtung 4 ist ein Gegengewicht 15 vorgesehen. Aus der räumlichen Perspektive der Figur 1 ist von der Kabelführung der Sondeneinrichtung 4 lediglich der zweite Endabschnitt 16 sichtbar. Eine Spiralfeder 17 greift mit einem Ende an einem von der Sonde 14 abgewandten Endabschnitt des Trägerarms der Sondeneinrichtung 4 an einer Stelle zwischen dem zweiten Endabschnitt 16 der Kabelführung und dem Gegengewicht 15 an dem Trägerarm an.

Im Rotierkopf 1 sind die beiden Sondeneinrichtungen 3 und 4 derart angeordnet, dass sich deren jeweilige Sonden 9 und 14 in Bezug auf das Durchgangsloch 2 im Wesentlichen diametral gegenüberliegen.

Im Betrieb des Prüfgerätes wird nun ein von den Sonden 9 und 14 zu prüfendes, längliches Prüfstück durch das Durchgangsloch 2 geschoben, während der Rotierkopf 1 um das Prüfstück rotiert. Durch geeignete Wahl der Gegengewichte 10 und 15 der Sondeneinrichtungen 3 und 4 sowie der an den Sondeneinrichtungen 3 und 4 angreifenden Spiralfedern 13 und 17 kann der Abstand, den die Sonden 9 und 14 während der Drehung des Rotierkopfes 1 von der Oberfläche des Prüfstückes einzuhalten haben, bzw. die Anpresskraft, mit der die Sonden 9 und 14 auf die Oberfläche des Prüfstückes drücken, eingestellt werden.

Allerdings erfahren bei Drehung des Rotierkopfes 1 Sondenkabel, die in den Kabelführungen der Sondeneinrichtungen 3 und 4 aufgenommen sind und die nach Austritt aus deren zweiten Endabschnitten 12 und 16 bogenförmig bis zu einem Anschluss oder Einlass des Rotierkopfs 1 verlaufen, Zentrifugalkräfte. Diese Zentrifugalkräfte üben wiederum eine Hebelwirkung auf die drehbar gelagerten Sondeneinrichtungen 3 und 4 aus, wodurch der voreingestellte Abstand der Sonden 9 und 14 von der Oberfläche des Prüfstückes bzw. deren Anpresskraft auf die Oberfläche des Prüfstückes beeinflusst wird. Diese Beeinflussung ist zudem abhängig von der jeweiligen Rotationsgeschwindigkeit des Rotierkopfes 1.

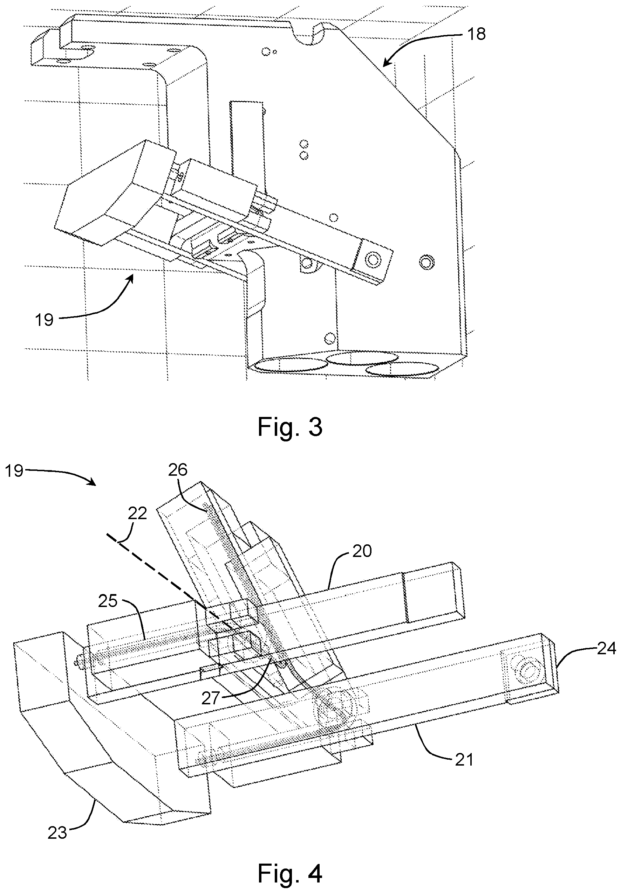

Figur 3 zeigt nun eine Detailansicht eines erfindungsgemäßen Rotierkopfes 18, bei dem diese Problematik überwunden ist. Dies liegt vor allem an dessen erfindungsgemäßer Sondeneinrichtung 19, die in der Figur 4 vergrößert dargestellt ist. Ähnlich den oben beschriebenen bekannten Sondeneinrichtungen 3 und 4 umfasst auch die erfindungsgemäße Sondeneinrichtung 19 zwei längliche Trägerarme 20 und 21, die parallel zueinander angeordnet sind. Beide Trägerarme 20 und 21 sind nach Art eines zweiseitigen Hebels um dieselbe Drehachse 22 drehbar gelagert, die in der Figur 4 gestrichelt gezeichnet ist. An einem Ende der Trägerarme 20 und 21 wird eine sich zwischen den Trägerarmen 20 und 21 erstreckende Sonde 23 gehalten, während an dem dazu entgegengesetzten Ende des Trägerarmes 21 ein Gegengewicht 24 angeordnet ist. Im eingebauten Zustand der Sondeneinrichtung 19 im Rotierkopf 18 ist die Sonde 23 dem in der Detailansicht der Figur 3 nicht zu sehenden Durchgangsloch des Rotierkopfes 18 zugewandt. Eine zweite, in der Figur 3 nicht gezeigte und der Sondeneinrichtung 19 entsprechende Sondeneinrichtung ist derart im Rotierkopf 18 vorgesehen, dass sich deren jeweilige Sonden in Bezug auf das nicht dargestellte Durchgangsloch des Rotierkopfes 18 im Wesentlichen diametral gegenüberliegen.

Die erfindungsgemäße Sondeneinrichtung 19 unterscheidet sich vor allem durch deren Kabelführung zur Aufnahme von Sondenkabeln von den bekannten Sondeneinrichtungen 3 und 4. So weist die Kabelführung der Sondeneinrichtung 19 einen entlang des Trägerarms 20 von der Sonde 23 zur Drehachse 22 verlaufenden ersten Endabschnitt 25 auf. Ein zweiter Endabschnitt 26 geht im Wesentlichen von der Drehachse 22 aus bzw. schließt mit dieser einen Winkel ein. Der erste Endabschnitt 25 und der zweite Endabschnitt 26 sind mittels eines Kabelführungsabschnittes 27 verbunden, der als Hohlwelle ausgeführt entlang der Drehachse 22 verläuft. Im eingebauten Zustand der Sondeneinrichtung 19 im Rotierkopf 18 ist der zweite Endabschnitt 26 relativ zum Rotierkopf 18 fest bzw. unbeweglich angeordnet, während der Trägerarm 20 um die Drehachse 22 drehbar ist und damit relativ zum zweiten Endabschnitt 26 eine Rotationsbewegung ausführen kann. Innerhalb des hohlen Kabelführungsabschnittes 27 kann sich ein Sondenkabel bei Kippen des Trägerarmes 20 flexibel verdrehen, ohne seine Lage bzw. seinen Abstand relativ zur Drehachse 22 signifikant zu verändern. Am Trägerarm 21 ist eine der Kabelführung des Trägerarmes 20 entsprechende Kabelführung vorgesehen.

Infolge der besonderen Kabelführung mit dem auf die Drehachse 22 zulaufenden ersten Endabschnitt 25, dem von der Drehachse 22 ausgehenden zweiten Endabschnitt 26 und dem zur Drehachse 22 parallelen Kabelführungsabschnitt 27 lässt sich ein in den Figuren 3 und 4 aus Übersichtlichkeitsgründen nicht gezeigtes Sondenkabel derart führen, dass sich bei Rotation des Rotierkopfes 18 der Einfluss der Zentrifugalkraft auf die erfindungsgemäße Sondeneinrichtung 19 minimieren lässt. Insbesondere treten bei der erfindungsgemäßen Sondeneinrichtung 19 keinerlei Kabelbögen auf, die einer derartigen Zentrifugalkraft ausgesetzt wären und diese an die Trägerarme 20 und 21 übertragen würden. Wenn sich zum Beispiel der Trägerarm 20 um die Drehachse 22 dreht, kann sich das Sondenkabel innerhalb des hohlen Kabelführungsabschnittes 27 frei verwinden, ohne seine Form zu verändern oder sich von der Drehachse 22 zu entfernen, so dass es auch keine Kräfte infolge der Rotation des Rotierkopfes 18 auf die Sondeneinrichtung 19 ausüben kann. Damit kann die Sondeneinrichtung 19 entsprechend dem Gewicht der Sonde 23 einmalig über das Gegengewicht 24 ausgewogen werden. Die ausgewogene Sondeneinrichtung 19 funktioniert dann über den gesamten Durchmesser- und Drehzahlbereich des Rotierkopfes 18 gleichermaßen. Die Anpresskraft an den Prüfling bzw. der Abstand der Sonde 23 von dessen Oberfläche wird nur noch durch eine von der Zentrifugalkraft unabhängige Kraft erzeugt, z.B. durch Torsionsfedern.

Bei einer anderen Ausführungsform einer erfindungsgemäßen Sondeneinrichtung wird von einem hohlen Kabelführungsabschnitt abgesehen und der erste Endabschnitt ist mit dem zweiten Endabschnitt direkt verbunden.

### Bezugszeichenliste

- 1.: Rotierkopf
- 2.: Durchgangsloch
- 3.: Sondeneinrichtung
- 4.: Sondeneinrichtung
- 5.: Trägerarm
- 6.: Trägerarm
- 7.: Mittelsteg
- 8.: Drehachse
- 9.: Sonde
- 10.: Gegengewicht
- 11.: erster Endabschnitt
- 12.: zweiter Endabschnitt
- 13.: Spiralfeder
- 14.: Sonde
- 15.: Gegengewicht
- 16.: zweiter Endabschnitt
- 17.: Spiralfeder
- 18.: Rotierkopf
- 19.: Sondeneinrichtung
- 20.: Trägerarm
- 21.: Trägerarm
- 22.: Drehachse
- 23.: Sonde
- 24.: Gegengewicht
- 25.: erster Endabschnitt
- 26.: zweiter Endabschnitt
- 27.: Kabelführungsabschnitt

## Patentansprüche

1. Sondeneinrichtung (19) für einen Rotierkopf (18), die
wenigstens einen um eine Drehachse (22) drehbar gelagerten Trägerarm (20, 21),
wenigstens eine mit dem Trägerarm (20, 21) verbundene Sonde (23) sowie
wenigstens eine Kabelführung zum Führen eines Sondenkabels umfasst, wobei
die Kabelführung einen entlang des Trägerarms (20, 21) von der Sonde (23) zur Drehachse (22) verlaufenden ersten Endabschnitt (25) und einen von der Drehachse (22) ausgehenden zweiten Endabschnitt (26) aufweist.

2. Sondeneinrichtung (19) nach Anspruch 1, bei welcher der erste Endabschnitt und der zweite Endabschnitt direkt miteinander verbunden sind oder bei welcher ein entlang der Drehachse (22) verlaufender Kabelführungsabschnitt (27) den ersten Endabschnitt (25) und den zweiten Endabschnitt (26) miteinander verbindet.

3. Sondeneinrichtung (19) nach Anspruch 1 oder 2, wobei der Trägerarm (20, 21) nach Art eines einseitigen oder eines zweiseitigen Hebels gelagert ist.

4. Rotierkopf (18) mit wenigstens einer Sondeneinrichtung (19) gemäß einem der vorhergehenden Ansprüche sowie wenigstens einem in der Kabelführung geführten Sondenkabel.

5. Prüfgerät mit wenigstens einer Sondeneinrichtung (19) gemäß einem der Ansprüche 1 bis 3 oder mit wenigstens einem Rotierkopf (18) gemäß Anspruch 4.

6. Prüfgerät nach Anspruch 5 mit wenigstens einem Paar an Sondeneinrichtungen (19), deren Sonden (23) einander zugewandt angeordnet sind.

## Claims

1. Probe device (19) for a rotating head (18), which device comprises
at least one carrier arm (20, 21) mounted rotatably about a rotational axis (22),
at least one probe (23) connected to the carrier arm (20, 21), and
at least one cable guide for the guidance of a probe cable, wherein
the cable guide has a first end portion (25) running along the carrier arm (20, 21) from the probe (23) to the rotational axis (22) and a second end portion (26) extending from the rotational axis (22).

2. Probe device (19) according to Claim 1, in which the first end portion and the second end portion are directly connected to each other, or in which a cable guide portion (27) running along the rotational axis (22) connects the first end portion (25) and the second end portion (26) to each other.

3. Probe device (19) according to Claim 1 or 2, wherein the carrier arm (20, 21) is mounted in the manner of a one-sided or a two-sided lever.

4. Rotating head (18) having at least one probe device (19) according to one of the preceding claims and having at least one probe cable guided in the cable guide.

5. Test apparatus having at least one probe device (19) according to one of Claims 1 to 3 or having at least one rotating head (18) according to Claim 4.

6. Test apparatus according to Claim 5, having at least one pair of probe devices (19), the probes (23) of which are arranged facing each other.

## Revendications

1. Agencement de capteurs (19) pour une tête rotative (18), qui comprend
au moins un bras de support (20, 21) monté de façon rotative autour d'un axe de rotation (22),
au moins un capteur (23) assemblé au bras de support (20, 21), ainsi que
au moins un chemin de câble pour conduire un câble de capteur,
dans lequel
le chemin de câble présente une première partie d'extrémité (25) s'étendant le long du bras de support (20, 21) du capteur (23) à l'axe de rotation (22) et une seconde partie d'extrémité (26) partant de l'axe de rotation (22).

2. Agencement de capteurs (19) selon la revendication 1, dans lequel la première partie d'extrémité et la seconde partie d'extrémité sont reliées directement l'une à l'autre ou dans lequel une partie de chemin de câble (27) s'étendant le long de l'axe de rotation (22) relie l'une à l'autre la première partie d'extrémité (25) et la seconde partie d'extrémité (26).

3. Agencement de capteurs (19) selon une revendication 1 ou 2, dans lequel le bras de support (20, 21) est monté à la manière d'un levier unilatéral ou bilatéral.

4. Tête rotative (18) avec au moins un agencement de capteurs (19) selon l'une quelconque des revendications précédentes, ainsi qu'avec au moins un câble de capteur conduit dans le chemin de câble.

5. Appareil de contrôle avec au moins un agencement de capteurs (19) selon l'une quelconque des revendications 1 à 3 ou avec au moins une tête rotative (18) selon la revendication 4.

6. Appareil de contrôle selon la revendication 5 avec au moins une paire d'agencements de capteurs (19), dont les capteurs (23) sont disposés de façon tournée l'un vers l'autre.
